# FASCICULE DE BREVET EUROPEEN

(11) **EP 3 890 567 B1**
(45) Date de publication et mention de la délivrance du brevet: **21.08.2024**
(21) Numéro de dépôt: 19813547.7
(22) Date de dépôt: 05.12.2019
(51) Int. Cl.: A47J 27/04

(54) **ACCESSOIRE CUISEUR VAPEUR AVEC COUVERCLE VERROUILLABLE**
DAMPFKOCHZUBEHÖR MIT VERRIEGELBAREM DECKEL
STEAM COOKER ACCESSORY WITH LOCKABLE COVER

(30) Priorité: 07.12.2018 FR 1872519
(43) Date de publication de la demande: 13.10.2021
(73) Titulaire: SEB S.A., 69130 Ecully (FR)
(72) Inventeur: ALLEMAND, Bernard, 70100 VELESMES ECHEVANNE (FR); FRADET, Gautier, 21120 ECHEVANNES (FR)
(74) Mandataire: SEB Développement
(86) Numéro de dépôt international: PCT/EP2019/083888
(87) Numéro de publication internationale: WO 2020/115244

(56) Documents cités:
- WO-A1-2015/086990
- WO-A1-2016/203129
- CN-A- 107 319 914

## Description

### Domaine technique

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

### Technique antérieure

Il est connu, du document FR 3 051 647 B1 déposé par la demanderesse, un accessoire cuiseur vapeur pour chauffer et/ou cuire à la vapeur des aliments contenus dans un récipient. L'accessoire cuiseur vapeur comporte un corps comprenant un générateur de vapeur et un réservoir d'eau. Le générateur de vapeur présente une chambre de production de vapeur reliée à une sortie de distribution de vapeur ménagée dans une partie inférieure du générateur de vapeur. Le réservoir d'eau alimente en eau la chambre de production de vapeur et présente une ouverture supérieure.

Cependant, en cas de renversement accidentel de l'accessoire cuiseur vapeur, l'eau contenue dans le réservoir d'eau peut s'échapper librement au travers de l'ouverture supérieure, pouvant entrainer des situations dangereuses pour l'utilisateur et son environnement.

### Exposé de l'invention

Un objet de la présente invention est de proposer un accessoire cuiseur vapeur utilisé avec un récipient pour chauffer et/ou cuire des aliments à la vapeur, qui peut être utilisé en toute sécurité.

Un autre objet de la présente invention est de proposer un accessoire cuiseur vapeur utilisé avec un récipient pour chauffer et/ou cuire des aliments à la vapeur, qui permet de mieux contrôler l'échappement de vapeur.

Un autre objet de la présente invention est de proposer un accessoire cuiseur vapeur utilisé avec un récipient pour chauffer et/ou cuire des aliments à la vapeur, qui présente une construction robuste et durable.

Un autre objet de la présente invention est de proposer un cuiseur vapeur électrique pour chauffer et/ou cuire des aliments à la vapeur comportant un récipient et un accessoire cuiseur vapeur qui peut être utilisé en toute sécurité.

Un autre objet de la présente invention est de proposer un cuiseur vapeur électrique pour chauffer et/ou cuire des aliments à la vapeur comportant un récipient et un accessoire cuiseur vapeur qui permet de mieux contrôler l'échappement de vapeur.

Un autre objet de la présente invention est de proposer un cuiseur vapeur électrique pour chauffer et/ou cuire des aliments à la vapeur comportant un récipient et un accessoire cuiseur vapeur qui présente une construction robuste et durable.

### Résumé de l'invention

Ces objets sont atteints avec un accessoire cuiseur vapeur pour chauffer et/ou cuire à la vapeur des aliments contenus dans un récipient, l'accessoire cuiseur vapeur comportant un corps comprenant un générateur de vapeur et un réservoir d'eau, le générateur de vapeur présentant une chambre de production de vapeur reliée à une sortie de distribution de vapeur ménagée dans une partie inférieure du générateur de vapeur, le réservoir d'eau alimentant en eau la chambre de production de vapeur et présentant une ouverture supérieure, le réservoir d'eau communiquant par une entrée d'alimentation d'eau avec la chambre de production de vapeur, la chambre de production de vapeur communiquant avec une sortie d'évacuation de vapeur disposée plus haut que l'entrée d'alimentation d'eau, la sortie d'évacuation de vapeur communiquant par un conduit avec la sortie de distribution de vapeur, du fait qu'il comporte un couvercle monté amovible sur le corps et ayant une position de fermeture dans laquelle le couvercle obture l'ouverture supérieure du réservoir d'eau.

L'accessoire cuiseur vapeur ainsi réalisé présente l'avantage de posséder un couvercle qui permet à la fois d'éviter l'introduction des impuretés ou des poussières dans le réservoir d'eau, et de limiter la fuite de vapeur s'échappant du réservoir d'eau. En effet, pendant le fonctionnement normal de l'accessoire cuiseur vapeur, la vapeur constituée de fines gouttelettes d'eau peut être produite dans le réservoir d'eau lorsque la température de l'eau présente dans le réservoir d'eau augmente. La présence d'un tel couvercle permet de contenir de la vapeur dans le corps.

Avantageusement, le couvercle est verrouillé dans sa position de fermeture sur le générateur de vapeur par l'intermédiaire d'un dispositif de verrouillage. Cette disposition présente l'avantage de limiter la fuite d'eau vers l'extérieur de l'accessoire cuiseur vapeur en cas de renversement accidentel.

Avantageusement, le dispositif de verrouillage est agencé en position centrale. Cette disposition présente une construction intuitive pour l'utilisateur et facile à mettre en oeuvre.

Avantageusement, le dispositif de verrouillage comporte un organe de verrouillage solidaire du générateur de vapeur et au moins un verrou solidaire du couvercle et prévu pour coopérer avec l'organe de verrouillage. Cette disposition a pour avantage de simplifier la construction du dispositif de verrouillage, tout en gardant un verrouillage efficace du couvercle. Cette disposition permet également de rendre l'organe de verrouillage invisible de l'extérieur.

Avantageusement, le verrou est configuré de façon à pouvoir passer d'une position de maintien dans laquelle le couvercle est verrouillé dans sa position de fermeture à une position de libération dans laquelle le couvercle est désolidarisé du générateur de vapeur, et inversement. Cette disposition permet de verrouiller et déverrouiller efficacement et facilement le couvercle

Avantageusement, le verrou est naturellement maintenu dans sa position de maintien sous l'action d'un moyen de rappel. Cette disposition présente l'avantage de garantir un bon maintien en position du verrou dans sa position de maintien.

Avantageusement, le verrou est disposé dans un organe de préhension du couvercle. Cette disposition présente une construction simple et intuitive à manipuler pour l'utilisateur.

Avantageusement, le dispositif de verrouillage comporte deux verrous qui sont disposés à l'opposé l'un de l'autre. Cette disposition présente l'avantage de rendre le dispositif de verrouillage maniable d'une seule main.

Avantageusement, l'organe de verrouillage est sensiblement cylindrique s'étendant selon un axe axial. Cette disposition permet à l'utilisateur de disposer et verrouiller le couvercle quelle que soit la position angulaire du couvercle, sans nécessité de chercher une position angulaire particulière pour engager le couvercle sur le corps.

Avantageusement, le corps présente une paroi de fond, le générateur de vapeur comportant un bouchon délimitant la chambre de production de vapeur et maintenu sur la paroi de fond du corps, et l'organe de verrouillage fait saillie d'une paroi supérieure du bouchon. Cette disposition présente l'avantage de posséder un bouchon permettant à la fois de mieux contrôler le cheminement de vapeur vers la sortie de distribution de vapeur et de contribuer au fonctionnement du verrouillage du couvercle.

Avantageusement, le couvercle comporte un joint d'étanchéité entourant le dispositif de verrouillage et configuré pour être en contact avec la paroi supérieure du bouchon lorsque le couvercle est dans sa position de fermeture. Cette disposition présente l'avantage de garantir une bonne étanchéité du dispositif de verrouillage lorsque le couvercle est verrouillé sur le bouchon. Une telle caractéristique prévient l'infiltration d'eau et/ou de la vapeur et les accumulations de tartre (carbonate de calcium) dans le dispositif de verrouillage, contribuant au bon fonctionnement du dispositif de verrouillage.

Ces objets sont également atteints avec un cuiseur vapeur électrique comportant un récipient pour contenir les aliments à chauffer et/ou à cuire et un accessoire cuiseur vapeur prévu pour reposer sur le récipient et pour chauffer et/ou cuire à la vapeur les aliments contenus dans le récipient selon l'une au moins des caractéristiques précitées.

### Brève description des dessins

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 illustre une vue en perspective éclatée d'un cuiseur vapeur électrique comportant un accessoire cuiseur vapeur et un récipient selon un mode particulier de réalisation de l'invention ;
La figure 2 illustre une vue en coupe de l'accessoire cuiseur vapeur illustré sur la figure 1, selon une ligne de coupe II-II ;
La figure 3 illustre une vue en perspective d'un couvercle de l'accessoire cuiseur vapeur illustré sur la figure 1 ;

### Description des modes de réalisation

Seuls les éléments nécessaires à la compréhension de l'invention ont été représentés. Pour faciliter la lecture des dessins, les mêmes éléments portent les mêmes références d'une figure à l'autre.

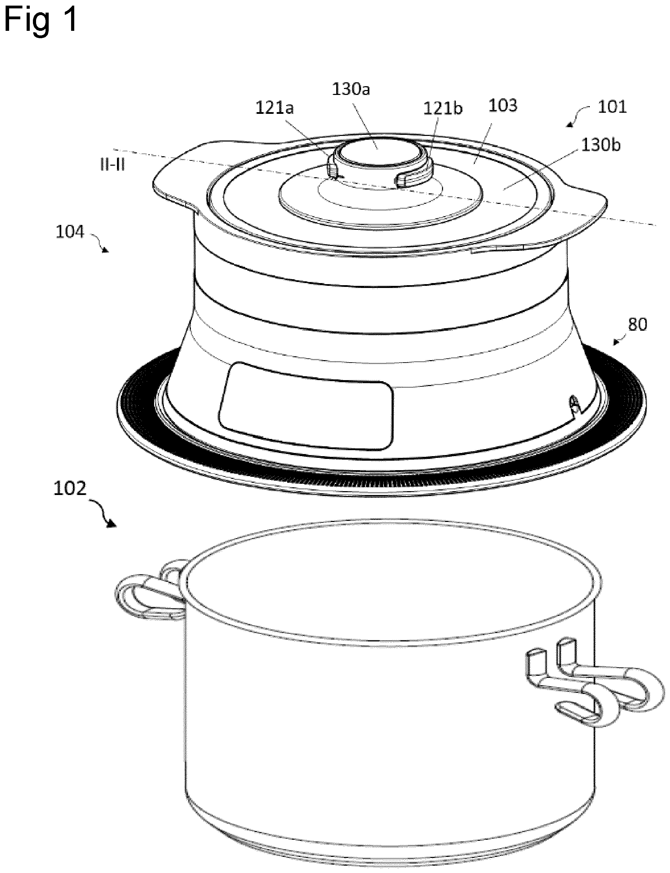

Le cuiseur vapeur électrique 101 illustré de manière schématique sur la figure 1 est un appareil pour chauffer et/ou cuire à la vapeur des aliments, comportant un récipient 102 pour contenir les aliments à chauffer et/ou à cuire, et un accessoire cuiseur vapeur 104 prévu pour reposer sur le récipient 102. Plus particulièrement, l'accessoire cuiseur vapeur 104 comporte un dispositif de support 80 prévu pour porter l'accessoire cuiseur vapeur 104, et pour reposer sur le récipient 102.

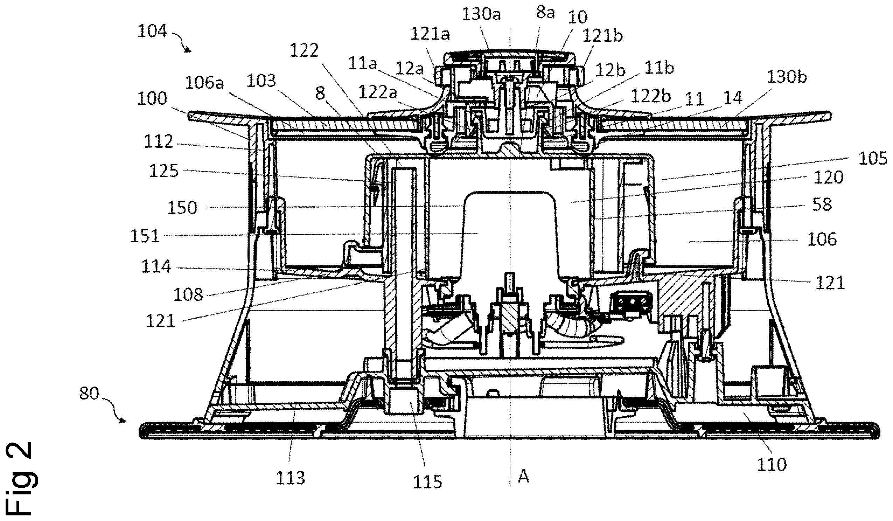

L'accessoire cuiseur vapeur 104 comprend un corps 100 présentant une paroi latérale extérieure 112 et une paroi de fond 114. Le corps 100 comporte un réservoir d'eau 106 délimité par la paroi latérale extérieure 112 et la paroi de fond 114. Le réservoir d'eau 106 communique avec l'extérieur par une ouverture supérieure 106a, l'ouverture supérieure 106a étant formée par une partie supérieure de la paroi latérale extérieure 112. Tel que représenté sur la figure 2, l'accessoire cuiseur vapeur 104 comporte un couvercle 103 amovible qui ferme le réservoir d'eau 106 au niveau de l'ouverture supérieure 106a. Le couvercle 103 est mobile entre une position d'ouverture dans laquelle le réservoir d'eau 106 est accessible depuis l'extérieur pour le remplissage d'eau et une position de fermeture dans laquelle le couvercle 103 obture l'ouverture supérieure 106a du réservoir d'eau 106.

Le corps 100 comporte un générateur de vapeur 105 présentant une chambre de production de vapeur 120. Le réservoir d'eau 106 entoure et alimente en eau la chambre de production de vapeur 120 par gravité. A cet effet le réservoir d'eau 106 communique par une entrée d'alimentation d'eau 121 avec la chambre de production de vapeur 120. Dans l'exemple de réalisation illustré sur la figure 2, le réservoir d'eau 106 communique avec la chambre de production de vapeur 120 par deux entrées d'alimentation d'eau 121. De préférence, le réservoir d'eau 106 présente un fond 108 déversant vers les deux entrées d'alimentation d'eau 121. Le fond 108 est formé par la paroi de fond 114 du corps 100.

La chambre de production de vapeur 120 comporte un dispositif de chauffe 150 pour transformer en vapeur l'eau présente dans la chambre de production de vapeur 120. Dans l'exemple de réalisation illustré sur la figure 2, le dispositif de chauffe 150 comprend un plot chauffant 151. Selon un autre mode particulier de réalisation de l'invention, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120.

La chambre de production de vapeur 120 est reliée à une sortie de distribution de vapeur 115 ménagée dans une partie inférieure 110 du générateur de vapeur 105. A cet effet, la chambre de production de vapeur 120 communique avec une sortie d'évacuation de vapeur 122 disposée plus haut que l'entrée d'alimentation d'eau 121. La sortie d'évacuation de vapeur 122 communique par un conduit 125 avec la sortie de distribution de vapeur 115.

Avantageusement, le conduit 125 est vertical. A titre de variante le conduit 125 peut être descendant sans nécessairement être vertical. De préférence le conduit 125 est dépourvu de chicanes. En d'autres termes, le conduit 125 est descendant de manière continue, sans nécessairement être rectiligne.

Le générateur de vapeur 105 comporte un bouchon 8, mieux visible sur la figure 2, délimitant la chambre de production de vapeur 120. A cet effet, le bouchon 8 comporte une première paroi latérale 58 délimitant latéralement la chambre de production de vapeur 120, et une paroi supérieure 8a reliée à la première paroi latérale 58 et délimitant en hauteur la chambre de production de vapeur 120. La première paroi latérale 58 s'étend depuis la paroi supérieure 8a jusqu'au fond 108 du réservoir d'eau 106. Plus particulièrement, la paroi supérieure 8a est plane.

Le bouchon 8 est monté amovible par rapport au corps 100. Le bouchon 8 est mobile en rotation entre une position verrouillée dans laquelle le bouchon 8 est solidaire du corps 100, et une position déverrouillée dans laquelle le bouchon 8 peut être séparée du corps 100. Plus particulièrement, le bouchon 8 est maintenu sur la paroi de fond 114 du corps 100 par une liaison à baïonnette.

Avantageusement, l'accessoire cuiseur vapeur 104 comporte un dispositif de verrouillage 10 qui permet de verrouiller le couvercle 103 sur le corps 100 lorsqu'il est dans sa position de fermeture. Plus précisément, le couvercle 103 est verrouillé sur le bouchon 8 du générateur de vapeur 105 par l'intermédiaire du dispositif de verrouillage 10.

Le dispositif de verrouillage 10 agencé en position centrale comporte un organe de verrouillage 11 solidaire du bouchon 8 et au moins un verrou 12a, 12b solidaire du couvercle 103 et prévu pour coopérer avec l'organe de verrouillage 11. Plus particulièrement, le dispositif de verrouillage 10 comporte deux verrous 12a, 12b disposés dans un organe de préhension 130a du couvercle 103. L'organe de préhension 130a présente une structure protubérante en position centrale et entourée par une paroi annulaire 130b du couvercle 103. Les deux verrous 12a, 12b sont disposés à l'opposé l'un de l'autre dans l'organe de préhension 130a. Les deux verrous 12a, 12b coopèrent avec l'organe de verrouillage 11 et sont configurés de façon à pouvoir passer d'une position de maintien dans laquelle le couvercle 103 est verrouillé dans sa position de fermeture à une position de libération dans laquelle le couvercle 103 est désolidarisé du bouchon 8, et inversement.

Chaque verrou 12a, 12b comporte un bouton d'appui 121a, 121b présentant une zone d'appui pour l'utilisateur, un crochet 122a, 122b coopérant avec l'organe de verrouillage 11 et une butée (non représentée sur les figures). Les deux verrous 12a, 12b sont naturellement maintenus dans leur position de maintien sous l'action d'un moyen de rappel (non représenté sur les figures) disposé entre les butées des deux verrous 12a, 12b. Le moyen de rappel applique une force de rappel sur les butées pour maintenir les verrous 12a, 12b dans leur position de maintien. Les verrous 12a, 12b passent de leur position de maintien à leur position de libération lorsque l'utilisateur applique sur les boutons d'appui 121a, 121b une force d'appui supérieure à la force de rappel pour comprimer le moyen de rappel. A titre d'exemple, le moyen de rappel est réalisé par un ressort de compression cylindrique ou par un élément élastiquement déformable.

Plus particulièrement, l'organe de verrouillage 11 fait saillie de la paroi supérieure 8a du bouchon 8 et s'étend selon un axe axial A vers une extrémité supérieure libre 11a pour former une paroi sensiblement cylindrique. L'organe de verrouillage 11 comporte un prolongement radial 11b au niveau de l'extrémité supérieure libre 11a destiné à venir en appui contre le crochet 122a, 122b lorsque les deux verrous 12a, 12b sont en position de maintien.

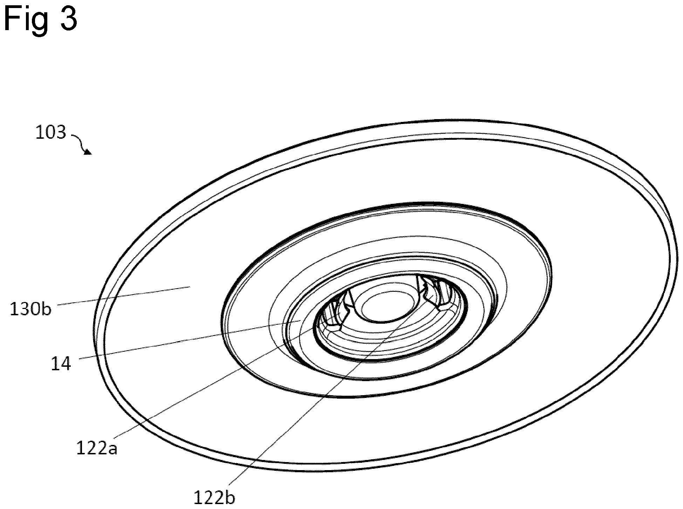

Le couvercle 103 comporte un joint d'étanchéité 14 entourant le dispositif de verrouillage 10 et configuré pour être en contact avec la paroi supérieure 8a du bouchon 8 lorsque le couvercle 103 est dans sa position de fermeture. Dans l'exemple de réalisation illustré sur la figure 3, un joint d'étanchéité 14 est porté par l'organe de préhension 130a. A titre de variante, le joint d'étanchéité 14 peut être porté par la paroi annulaire 130b.

Le cuiseur vapeur électrique 101 illustré sur la figure 1 et l'accessoire cuiseur vapeur 104 illustré sur les figures 1 à 3 fonctionnent et s'utilisent de la manière suivante.

Après avoir disposé les aliments dans le récipient 102, l'utilisateur dispose l'accessoire cuiseur vapeur 104 sur le récipient 102. L'utilisateur saisit d'une main l'organe de préhension 130a et appuie sur les boutons d'appui 121a, 121b pour faire passer les verrous 12a, 12b de leur position de maintien dans laquelle le couvercle 103 est verrouillé sur le bouchon 8 à leur position de libération dans laquelle le couvercle 103 peut être retiré du bouchon 8. Puis l'utilisateur enlève le couvercle 103 et remplit le réservoir d'eau 106 par l'ouverture supérieure 106a. Après avoir rempli le réservoir d'eau 106, l'utilisateur prend le couvercle 103 et appuie à nouveau sur les boutons d'appui 121a, 121b en positionnant les verrous 12a, 12b au-dessus de l'organe de verrouillage 11. L'utilisateur place le couvercle 103 dans sa position de fermeture pour fermer le réservoir d'eau 106 en maintenant l'appui sur les boutons d'appui 121a, 121b, puis relâche les boutons d'appui 121a, 121b pour verrouiller le couvercle 103 dans sa position de fermeture.

L'eau s'écoule par les deux entrées d'alimentation d'eau 121 dans la chambre de production de vapeur 120. De préférence, l'utilisateur remplit le réservoir d'eau 106 jusqu'à un niveau suffisamment inférieur à la sortie d'évacuation de vapeur 122, pour éviter que l'eau atteigne la sortie d'évacuation de vapeur 122 et s'écoule par le conduit 125. L'utilisateur met alors en marche le dispositif de chauffe 150. La température de l'eau présente dans la chambre de production de vapeur 120 s'élève jusqu'à ce que de la vapeur soit produite. La vapeur produite dans la chambre de production de vapeur 120 s'échappe par la sortie d'évacuation de vapeur 122 pour atteindre la sortie de distribution de vapeur 115 en descendant par le conduit 125. La vapeur sortant de la sortie de distribution de vapeur 115 se répand dans le récipient 102 pour chauffer et/ou cuire les aliments.

Bien entendu, l'invention n'est nullement limitée au mode de réalisation précédemment décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, pour autant qu'elles restent dans la portée des revendications annexées.

Dans une variante de réalisation de l'invention non représentée, le dispositif de verrouillage comporte un bouton central qui est configuré pour faire passer les deux verrous entre leur position de maintien et leur position de libération.

Dans une autre variante de réalisation de l'invention non représentée, le couvercle est maintenu sur le corps par une liaison à baïonnette.

## Revendications

1. Accessoire cuiseur vapeur (104) pour chauffer et/ou cuire à la vapeur des aliments contenus dans un récipient (102), l'accessoire cuiseur vapeur (104) comportant un corps (100) comprenant un générateur de vapeur (105) et un réservoir d'eau (106), le générateur de vapeur (105) présentant une chambre de production de vapeur (120) reliée à une sortie de distribution de vapeur (115) ménagée dans une partie inférieure (110) du générateur de vapeur (105), le réservoir d'eau (106) alimentant en eau la chambre de production de vapeur (120) et présentant une ouverture supérieure (106a), le réservoir d'eau (106) communiquant par une entrée d'alimentation d'eau (121) avec la chambre de production de vapeur (120), la chambre de production de vapeur (120) communiquant avec une sortie d'évacuation de vapeur (122) disposée plus haut que l'entrée d'alimentation d'eau (121), la sortie d'évacuation de vapeur (122) communiquant par un conduit (125) avec la sortie de distribution de vapeur (115), **caractérisé en ce qu'**il comporte un couvercle (103) monté amovible sur le corps (100) et ayant une position de fermeture dans laquelle le couvercle (103) obture l'ouverture supérieure (106a) du réservoir d'eau (106).

2. Accessoire cuiseur vapeur (104) selon la revendication 1, **caractérisé en ce que** le couvercle (103) est verrouillé dans sa position de fermeture sur le générateur de vapeur (105) par l'intermédiaire d'un dispositif de verrouillage (10).

3. Accessoire cuiseur vapeur (104) selon la revendication 2, **caractérisé en ce que** le dispositif de verrouillage (10) est agencé en position centrale.

4. Accessoire cuiseur vapeur (104) selon l'une des revendications 2 à 3, **caractérisé en ce que** le dispositif de verrouillage (10) comporte un organe de verrouillage (11) solidaire du générateur de vapeur (105) et au moins un verrou (12a, 12b) solidaire du couvercle (103) et prévu pour coopérer avec l'organe de verrouillage (11).

5. Accessoire cuiseur vapeur (104) selon la revendication 4, **caractérisé en ce que** le verrou (12a, 12b) est configuré de façon à pouvoir passer d'une position de maintien dans laquelle le couvercle (103) est verrouillé dans sa position de fermeture à une position de libération dans laquelle le couvercle (103) est désolidarisé du générateur de vapeur (105), et inversement.

6. Accessoire cuiseur vapeur (104) selon la revendication 5, **caractérisé en ce que** le verrou (12a, 12b) est naturellement maintenu dans sa position de maintien sous l'action d'un moyen de rappel.

7. Accessoire cuiseur vapeur (104) selon l'une des revendications 4 à 6, **caractérisé en ce que** le verrou (12a, 12b) est disposé dans un organe de préhension (130a) du couvercle (103).

8. Accessoire cuiseur vapeur (104) selon l'une des revendications 4 à 7, **caractérisé en ce que** le dispositif de verrouillage (10) comporte deux verrous (12a, 12b) qui sont disposés à l'opposé l'un de l'autre.

9. Accessoire cuiseur vapeur (104) selon l'une des revendications 4 à 8, **caractérisé en ce que** l'organe de verrouillage (11) est sensiblement cylindrique s'étendant selon un axe axial (A).

10. Accessoire cuiseur vapeur (104) selon l'une des revendications 4 à 9, dans lequel le corps (100) présente une paroi de fond (114), **caractérisé en ce que** le générateur de vapeur (105) comporte un bouchon (8) délimitant la chambre de production de vapeur (120) et maintenu sur la paroi de fond (114) du corps (100), et **en ce que** l'organe de verrouillage (11) fait saillie d'une paroi supérieure (8a) du bouchon (8).

11. Accessoire cuiseur vapeur (104) selon la revendication 10, **caractérisé en ce que** le couvercle (103) comporte un joint d'étanchéité (14) entourant le dispositif de verrouillage (10) et configuré pour être en contact avec la paroi supérieure (8a) du bouchon (8) lorsque le couvercle (103) est dans sa position de fermeture.

12. Accessoire cuiseur vapeur (104) selon l'une des revendications 1 à 11, **caractérisé en ce que** le générateur de vapeur (105) comporte un bouchon (8) délimitant la chambre de production de vapeur (120).

13. Cuiseur vapeur électrique (101) comportant un récipient (102) pour contenir les aliments à chauffer et/ou à cuire et un accessoire cuiseur vapeur (104) prévu pour reposer sur le récipient (102) et pour chauffer et/ou cuire à la vapeur les aliments contenus dans le récipient (102), **caractérisé en ce que** l'accessoire cuiseur vapeur (104) est conforme à l'une des revendications 1 à 12.

## Patentansprüche

1. Dampfkocherzubehör (104) zum Erwärmen und/oder Kochen von Lebensmitteln mit Dampf, die in einem Behälter (102) enthalten sind, wobei das Dampfkocherzubehör (104) einen Körper (100) umfasst, der einen Dampfgenerator (105) und ein Wasserreservoir (106) umfasst, wobei der Dampfgenerator (105) eine Dampfproduktionskammer (120) aufweist, die mit einem Dampfverteilungsausgang (115) verbunden ist, der in einem unteren Teil (110) des Dampfgenerators (105) bereitgestellt ist, wobei das Wasserreservoir (106) die Dampfproduktionskammer (120) mit Wasser versorgt und eine obere Öffnung (106a) aufweist, wobei das Wasserreservoir (106) durch einen Wasserversorgungseingang (121) mit der Dampfproduktionskammer (120) kommuniziert, wobei die Dampfproduktionskammer (120) mit einem Dampfevakuierungsausgang (122) kommuniziert, der höher als der Wasserversorgungseingang (121) angebracht ist, wobei der Dampfevakuierungsausgang (122) durch eine Leitung (125) mit dem Dampfverteilungsausgang (115) kommuniziert, **dadurch gekennzeichnet, dass** es einen Deckel (103) umfasst, der abnehmbar auf dem Körper (100) montiert ist und eine Verschlussposition aufweist, in der der Deckel (103) die obere Öffnung (106a) des Wasserreservoirs (106) verschließt.

2. Dampfkocherzubehör (104) nach Anspruch 1, **dadurch gekennzeichnet, dass** der Deckel (103) in seiner Verschlussposition auf dem Dampfgenerator (105) mithilfe einer Verriegelungsvorrichtung (10) verriegelt ist.

3. Dampfkocherzubehör (104) nach Anspruch 2, **dadurch gekennzeichnet, dass** die Verriegelungsvorrichtung (10) in zentraler Position angeordnet ist.

4. Dampfkocherzubehör (104) nach einem der Ansprüche 2 bis 3, **dadurch gekennzeichnet, dass** die Verriegelungsvorrichtung (10) ein Verriegelungsbauteil (11), das mit dem Dampfgenerator (105) einstückig ist, und mindestens einen Riegel (12a, 12b), der mit dem Deckel (103) einstückig und vorgesehen ist, um mit dem Verriegelungsbauteil (11) zusammenzuwirken, umfasst.

5. Dampfkocherzubehör (104) nach Anspruch 4, **dadurch gekennzeichnet, dass** der Riegel (12a, 12b) auf eine Weise konfiguriert ist, um von einer Halteposition, in der der Deckel (103) in seiner Verschlussposition verriegelt ist, zu einer Freigabeposition übergehen zu können, in der der Deckel (103) von dem Dampfgenerator (105) freigegeben wird, und umgekehrt.

6. Dampfkocherzubehör (104) nach Anspruch 5, **dadurch gekennzeichnet, dass** der Riegel (12a, 12b) unter der Wirkung eines Rückstellmittels auf natürliche Weise in seiner Halteposition gehalten wird.

7. Dampfkocherzubehör (104) nach einem der Ansprüche 4 bis 6, **dadurch gekennzeichnet, dass** der Riegel (12a, 12b) in einem Greifbauteil (130a) des Deckels (103) angebracht ist.

8. Dampfkocherzubehör (104) nach einem der Ansprüche 4 bis 7, **dadurch gekennzeichnet, dass** die Verriegelungsvorrichtung (10) zwei Riegel (12a, 12b) umfasst, die einander gegenüberliegend angebracht sind.

9. Dampfkocherzubehör (104) nach einem der Ansprüche 4 bis 8, **dadurch gekennzeichnet, dass** das Verriegelungsbauteil (11) im Wesentlichen zylindrisch ist und sich entlang einer axialen Achse (A) erstreckt.

10. Dampfkocherzubehör (104) nach einem der Ansprüche 4 bis 9, wobei der Körper (100) eine Bodenwand (114) aufweist, **dadurch gekennzeichnet, dass** der Dampfgenerator (105) einen Stopfen (8) umfasst, der die Dampfproduktionskammer (120) abgrenzt und auf der Bodenwand (114) des Körpers (100) gehalten wird, und dadurch, dass das Verriegelungsbauteil (11) von einer oberen Wand (8a) des Stopfens (8) hervorsteht.

11. Dampfkocherzubehör (104) nach Anspruch 10, **dadurch gekennzeichnet, dass** der Deckel (103) ein Dichtungselement (14) umfasst, das die Verriegelungsvorrichtung (10) umgibt und konfiguriert ist, um mit der oberen Wand (8a) des Stopfens (8) in Kontakt vorzuliegen, wenn der Deckel (103) in seiner Verschlussposition vorliegt.

12. Dampfkocherzubehör (104) nach einem der Ansprüche 1 bis 11, **dadurch gekennzeichnet, dass** der Dampfgenerator (105) einen Stopfen (8) umfasst, der die Dampfproduktionskammer (120) abgrenzt.

13. Elektrischer Dampfkocher (101), umfassend einen Behälter (102) zum Enthalten von zu erwärmenden und/oder zu kochenden Lebensmitteln, und ein Dampfkocherzubehör (104), das zum Aufliegen auf dem Behälter (102) und zum Erwärmen und/oder Kochen mit dem Dampf der in dem Behälter (102) enthaltenen Lebensmitteln vorgesehen ist, **dadurch gekennzeichnet, dass** das Dampfkocherzubehör (104) einem der Ansprüche 1 bis 12 entspricht.

## Claims

1. Steam cooker accessory (104) for heating and/or steaming food contained in a container (102), the steam cooker accessory (104) comprising a body (100) which comprises a steam generator (105) and a water tank (106), the steam generator (105) having a steam-generating chamber (120) connected to a steam distribution outlet (115) provided in a lower portion (110) of the steam generator (105), the water tank (106) supplying water to the steam-generating chamber (120) and having an upper opening (106a), the water tank (106) communicating via a water supply inlet (121) with the steam-generating chamber (120), the steam-generating chamber (120) communicating with a steam discharge outlet (122) arranged higher than the water supply inlet (121), the steam discharge outlet (122) communicating via a duct (125) with the steam distribution outlet (115), **characterised in that** it comprises a cover (103) removably mounted on the body (100) and having a closed position in which the cover (103) blocks the upper opening (106a) of the water tank (106).

2. Steam cooker accessory (104) according to claim 1, **characterised in that** the cover (103) is locked in its closed position on the steam generator (105) by means of a locking device (10).

3. Steam cooker accessory (104) according to claim 2, **characterised in that** the locking device (10) is arranged in a central position.

4. Steam cooker accessory (104) according to any one of claims 2 to 3, **characterised in that** the locking device (10) comprises a locking member (11) secured to the steam generator (105) and at least one lock (12a, 12b) secured to the cover (103) and designed to engage with the locking member (11).

5. Steam cooker accessory (104) according to claim 4, **characterised in that** the lock (12a, 12b) is configured so as to be able to move from a holding position in which the cover (103) is locked in its closed position to a release position in which the cover (103) is disengaged from the steam generator (105), and vice versa.

6. Steam cooker accessory (104) according to claim 5, **characterised in that** the lock (12a, 12b) is naturally held in its holding position by the action of a return means.

7. Steam cooker accessory (104) according to any one of claims 4 to 6, **characterised in that** the lock (12a, 12b) is arranged in a gripping member (130a) of the cover (103).

8. Steam cooker accessory (104) according to any one of claims 4 to 7, **characterised in that** the locking device (10) comprises two locks (12a, 12b) which are arranged opposite one another.

9. Steam cooker accessory (104) according to any one of claims 4 to 8, **characterised in that** the locking member (11) is substantially cylindrical extending along an axial axis (A).

10. Steam cooker accessory (104) according to any one of claims 4 to 9, wherein the body (100) has a bottom wall (114), **characterised in that** the steam generator (105) comprises a stopper (8) delimiting the steam-generating chamber (120) and held on the bottom wall (114) of the body (100), and **in that** the locking member (11) projects from an upper wall (8a) of the stopper (8).

11. Steam cooker accessory (104) according to claim 10, **characterised in that** the cover (103) comprises a seal (14) surrounding the locking device (10) and configured to be in contact with the upper wall (8a) of the stopper (8) when the cover (103) is in its closed position.

12. Steam cooker accessory (104) according to any one of claims 1 to 11, **characterised in that** the steam generator (105) comprises a stopper (8) delimiting the steam-generating chamber (120).

13. Electric steam cooker (101) comprising a container (102) for containing food to be heated and/or cooked and a steam cooker accessory (104) designed to rest on the container (102) and to heat and/or steam the food contained in the container (102), **characterised in that** the steam cooker accessory (104) is as claimed in any one of claims 1 to 12.
